# EUROPEAN PATENT APPLICATION

(11) **EP 4 207 681 A1**
(43) Date of publication of application: **05.07.2023**
(21) Application number: 22165547.5
(22) Date of filing: 30.03.2022
(51) Int. Cl.: H04L 9/40, G06N 20/00

(54) **ARTIFICIAL INTELLIGENCE SYSTEM AND METHOD THEREOF FOR DEFENDING AGAINST CYBER ATTACKS**

(30) Priority: 28.12.2021 TW 110149076
(71) Applicant: Ecolux Technology Co., Ltd., Zhubei City, Hsinchu County 302 (TW)
(72) Inventor: LAI, YU-CHENG, Zhubei City, Hsinchu County 302 (TW)
(74) Representative: Bandpay & Greuter

(57) **Abstract**

The invention relates to an artificial intelligence system and a method thereof for defending against cyber attacks by using an artificial intelligence model to quickly identify and filter network packets with attacking behaviors, and to avoid a large amount of computing resource consumption caused by identity authentication. In order to effectively solve problems of the prior art, a main object of the invention is to provide an artificial intelligence system and a method thereof for defending against cyber attacks by using an artificial intelligence model to quickly identify and filter network packets with attacking behaviors, and to avoid a large amount of computing resource consumption caused by using identity authentication alone.

## Description

### BACKGROUND OF THE INVENTION

### Field of Invention

The invention relates to an artificial intelligence system and a method thereof for defending against cyber attacks by using an artificial intelligence model to quickly identify and filter network packets with attacking behaviors, and to avoid a large amount of computing resource consumption caused by identity authentication.

### Related Art

With the rapid development of the Internet, in addition to speeding up the transmission of information, it has also changed the behavior of many industries. In order to ensure security on the Internet, how to prevent cyber attacks is a major issue. The conventional way to prevent cyber attacks is to start packets analysis after an attack occurs. Due to the diversification of Internet transmission methods, the single-type cyber attack behavior in the past has begun to change into a composite attack behavior or a brand-new attack method.

The conventional means or method used to defend against DDoS attacks mainly relies on empirical law and uses CDN to dredge traffic to alleviate the damage caused by DDoS attacks. The main design intention of CDN is to improve service quality and increase revenue by adding equipment to service with higher traffic, but using CDN to mitigate DDoS attacks will result in huge costs for users, and it requires a large amount of human resources to analyze attack patterns, formulate rules, and avoid conflicts between rules, so this defense method is too passive and the defense range is quite limited.

In addition, in order to prevent network equipment from being hacked, some operators will use communication protocols such as TLS for identity authentication to confirm the identity of both parties in the connection, but hackers will use the time-consuming characteristics of computing of communication protocols to consume a large amount of computing resources of the communication equipment to achieve an object of paralyzing the communication equipment.

In addition, there is a conventional method for filtering malicious traffic intrusion, which is mainly to import packets into a detection and filtering equipment, and the detection and filtering equipment needs to convert the packets into traffic images, and then uses the model images of known malicious traffic packets to compare with the traffic images to analyze the traffic images to determine whether the traffic images conform to the model images. However, in this conventional method, in addition to requiring to know the model images of the malicious traffic packets first, which increases the filtering process, the process of converting the packets into the traffic images consumes operation efficiency, and the efficiency in comparing images needs to be improved in order to make an accurate comparison, additional equipment is required to improve the operation efficiency, and the detection and filtering equipment also needs to constantly change the traffic images and the model images of the malicious traffic packets according to changes of the malicious packets, which is relatively troublesome in comparison and analysis.

### SUMMARY OF THE INVENTION

Therefore, in order to effectively solve the above problems, a main object of the invention is to provide an artificial intelligence system and a method thereof for defending against cyber attacks by using an artificial intelligence model to quickly identify and filter network packets with attacking behaviors, and to avoid a large amount of computing resource consumption caused by using identity authentication alone.

Another object of the invention is to provide an artificial intelligence system and a method thereof for defending against cyber attacks capable of greatly reducing costs.

In order to achieve the above objects, the invention provides an artificial intelligence system for defending against cyber attacks comprising: at least one user equipment, the user equipment has a user equipment data and generates at least one network packet; a network equipment, the network equipment is connected to the user equipment, the network equipment has a packet filtering unit, the packet filtering unit has at least one user filtering database, the packet filtering unit receives the network packet and transmits the network packet to an identity authentication equipment or filters the network packet according to the user filtering database, the identity authentication equipment receives the network packet, and authenticates an identity of the user equipment that generates the network packet, and transmits the network packet to a server equipment according to an identity authentication result.

According to one embodiment of the artificial intelligence system for defending against cyber attacks of the invention, wherein the network equipment further comprises: a packet capturing unit, the packet capturing unit is connected to the packet filtering unit and captures the network packet transmitted to the identity authentication equipment; a packet storage unit, the packet storage unit is connected to the packet capturing unit and stores the network packet; a characteristic capturing unit, the characteristic capturing unit is connected to the packet storage unit and captures the network packet and analyzes the network packet by using at least one characteristic template to generate a behavior characteristic information and a packet information of the network packet; a characteristic storage unit, the characteristic storage unit is connected to the characteristic capturing unit and stores the behavior characteristic information and the packet information; and a processing unit, the processing unit is connected to the characteristic capturing unit and receives its behavior characteristic information, an artificial intelligence model of the processing unit determines whether the behavior characteristic information of the network packet is normal or malicious and generates a characteristic information result, the processing unit transmits the characteristic information result of the malicious network packet to the packet filtering unit, the packet filtering unit receives the packet information of the characteristic storage unit, and the packet filtering unit stores the user equipment data that generates the malicious network packet in the user filtering database through the characteristic information result and the packet information.

According to one embodiment of the artificial intelligence system for defending against cyber attacks of the invention, wherein the network equipment further comprises an automatic characteristic labeling unit and a characteristic automatic labeling storage unit, the automatic characteristic labeling unit is connected to the characteristic storage unit, the automatic characteristic labeling unit captures and labels the behavior characteristic information in the characteristic storage unit, so that the behavior characteristic information has a characteristic automatic classification label, the characteristic automatic labeling storage unit is connected to the automatic characteristic labeling unit and stores the behavior characteristic information and the characteristic automatic classification label to which the behavior characteristic information belongs, and the characteristic automatic labeling storage unit is connected to a training unit, a to-be-trained model of the training unit captures the behavior characteristic information and the characteristic automatic classification label to which the behavior characteristic information belongs and generates a trained model.

According to one embodiment of the artificial intelligence system for defending against cyber attacks of the invention, wherein the network equipment further comprises a comparison unit, the comparison unit is connected to the training unit and a correct characteristic label storage unit, the correct characteristic label storage unit stores at least one training characteristic information and a correct characteristic classification label of the training characteristic information, the comparison unit captures the training characteristic information and the correct characteristic classification label of the correct characteristic label storage unit, the training unit outputs the trained model to the comparison unit, the trained model captures the training characteristic information and outputs a training information result, and the comparison unit compares the training information result with the training characteristic information and the correct characteristic classification label to determine to optimize the trained model or output the trained model to the processing unit.

According to one embodiment of the artificial intelligence system for defending against cyber attacks of the invention, wherein the network equipment further comprises an optimization unit, and the optimization unit is connected to the comparison unit to perform optimization when the comparison unit determines to optimize the trained model.

According to one embodiment of the artificial intelligence system for defending against cyber attacks of the invention, wherein the optimization unit is further connected to the automatic characteristic labeling unit, so that when the comparison unit determines to optimize the trained model, the optimization unit optimizes the automatic characteristic labeling unit, and the automatic characteristic labeling unit generates the other characteristic automatic classification label.

According to one embodiment of the artificial intelligence system for defending against cyber attacks of the invention, wherein the optimization unit is further connected to the characteristic capturing unit, so that when the comparison unit determines to optimize the trained model, the optimization unit makes the characteristic capturing unit to use the other characteristic template, and the characteristic capturing unit generates the other behavior characteristic information according to the other characteristic template.

The invention further provides an artificial intelligence method for defending against cyber attacks comprising: at least one user equipment generating at least one network packet to a network equipment; a packet filtering unit of the network equipment receiving the network packet and transmitting the network packet to an identity authentication equipment or filtering the network packet according to a user filtering database; the identity authentication equipment receiving the network packet, and authenticating an identity of the user equipment that generating the network packet, and transmitting the network packet to a server equipment according to an identity authentication result.

According to one embodiment of the artificial intelligence method for defending against cyber attacks of the invention, wherein the step of the identity authentication equipment receiving the network packet, and authenticating an identity of the user equipment that generating the network packet, and transmitting the network packet to a server equipment according to an identity authentication result comprises: a packet capturing unit capturing the network packet transmitted to the identity authentication equipment from the packet filtering unit; a packet storage unit storing the network packet captured by the packet capturing unit, a characteristic capturing unit capturing the network packet of the packet storage unit and analyzing the network packet by using at least one characteristic template to generate a behavior characteristic information and a packet information of the network packet and storing the behavior characteristic information and the packet information in a characteristic storage unit; an artificial intelligence model of a processing unit determining whether the behavior characteristic information of the network packet being normal or malicious and generating a characteristic information result; and the processing unit transmitting the characteristic information result of the malicious network packet to the packet filtering unit, the packet filtering unit receiving the packet information of the characteristic storage unit, and the packet filtering unit storing the user equipment data that generating the malicious network packet in the user filtering database through the characteristic information result and the packet information.

According to one embodiment of the artificial intelligence method for defending against cyber attacks of the invention, wherein the step of a characteristic capturing unit capturing the network packet of the packet storage unit and analyzing the network packet by using at least one characteristic template to generate a behavior characteristic information and a packet information of the network packet comprises: a characteristic storage unit storing the behavior characteristic information of the characteristic capturing unit, and an automatic characteristic labeling unit capturing and labeling the behavior characteristic information in the characteristic storage unit, so that the behavior characteristic information having a characteristic automatic classification label; a characteristic automatic labeling storage unit storing the behavior characteristic information and the characteristic automatic classification label to which the behavior characteristic information belonging, and a to-be-trained model of a training unit capturing the behavior characteristic information and the characteristic automatic classification label to which the behavior characteristic information belonging and generating a trained model; outputting the trained model to a comparison unit, the comparison unit capturing a training characteristic information and a correct characteristic classification label of a correct characteristic label storage unit; the trained model capturing the training characteristic information and outputting a training information result; and the comparison unit comparing the training information result with the training characteristic information and the correct characteristic classification label to determine to optimize the trained model or output the trained model to the processing unit.

According to one embodiment of the artificial intelligence method for defending against cyber attacks of the invention, wherein the step of the comparison unit comparing the training information result with the training characteristic information and the correct characteristic classification label to determine to optimize the trained model comprises: an optimization unit optimizing the automatic characteristic labeling unit, the automatic characteristic labeling unit capturing and labeling the behavior characteristic information in the characteristic storage unit, so that the behavior characteristic information having the other characteristic automatic classification label; the characteristic automatic labeling storage unit storing the behavior characteristic information and the other characteristic automatic classification label to which the behavior characteristic information belonging; the to-be-trained model of the training unit capturing the behavior characteristic information and the characteristic automatic classification label to which the behavior characteristic information belonging and outputting the other trained model; outputting the other trained model to the comparison unit, the comparison unit capturing the training characteristic information and the correct characteristic classification label; the other trained model capturing the training characteristic information and outputting the other training information result; and the comparison unit comparing the other training information result with the training characteristic information and the correct characteristic classification label and outputting the other trained model to the processing unit.

According to one embodiment of the artificial intelligence method for defending against cyber attacks of the invention, wherein the step of the comparison unit comparing the training information result with the training characteristic information and the correct characteristic classification label to determine to optimize the trained model comprises: connecting an optimization unit to the characteristic capturing unit; the optimization unit making the characteristic capturing unit to use the other characteristic template, and the characteristic capturing unit generating the other behavior characteristic information according to the other characteristic template; the automatic characteristic labeling unit capturing and labeling the other behavior characteristic information in the characteristic storage unit, so that the behavior characteristic information having the other characteristic automatic classification label; the characteristic automatic labeling storage unit storing the behavior characteristic information and the other characteristic automatic classification label to which the behavior characteristic information belonging; the to-be-trained model of the training unit capturing the behavior characteristic information and the characteristic automatic classification label to which the behavior characteristic information belonging and outputting the other trained model; outputting the other trained model to the comparison unit, the comparison unit capturing the training characteristic information and the correct characteristic classification label; the other trained model capturing the training characteristic information and outputting the other training information result; and the comparison unit comparing the other training information result with the training characteristic information and the correct characteristic classification label and outputting the other trained model to the processing unit.

### BRIEF DESCRIPTION OF THE DRAWINGS

FIG. 1 is a schematic diagram of a system architecture of an artificial intelligence system for defending against cyber attacks according to the invention.
FIG. 2 is a schematic diagram illustrating implementation of the system architecture of the artificial intelligence system for defending against cyber attacks according to the invention.
FIG. 3 is a schematic diagram illustrating implementation of another system architecture of the artificial intelligence system for defending against cyber attacks according to the invention.
FIG. 4 is a schematic diagram of contents of a behavior characteristic information according to the invention.
FIG. 5 is a schematic diagram illustrating implementation of optimization of another system architecture of the artificial intelligence system for defending against cyber attacks according to the invention.
FIG. 6 is a flow chart of an artificial intelligence method for defending against cyber attacks according to the invention.
FIG. 7 is a further flow chart of the artificial intelligence method for defending against cyber attacks according to the invention.
FIG. 8 is a flow chart of comparing by the artificial intelligence method for defending against cyber attacks according to the invention.
Fig. 9 is a flow chart of optimizing by the artificial intelligence method for defending against cyber attacks according to the invention.
FIG. 10 is a flow chart of another optimizing by the artificial intelligence method for defending against cyber attacks according to the invention.

### DETAILED DESCRIPTION OF THE INVENTION

The above objects of the invention, as well as its structural and functional features, will be described in accordance with the preferred embodiments of the accompanying drawings.

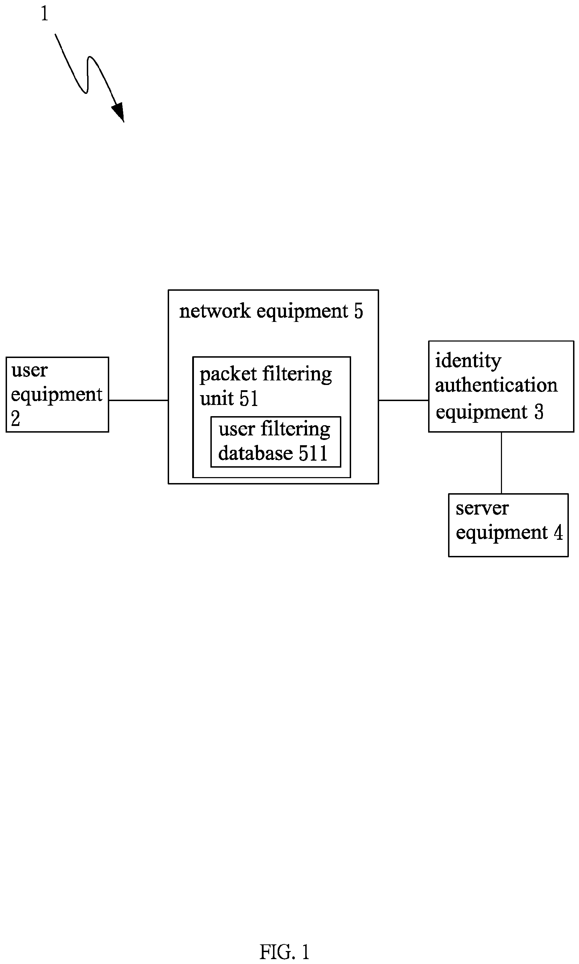

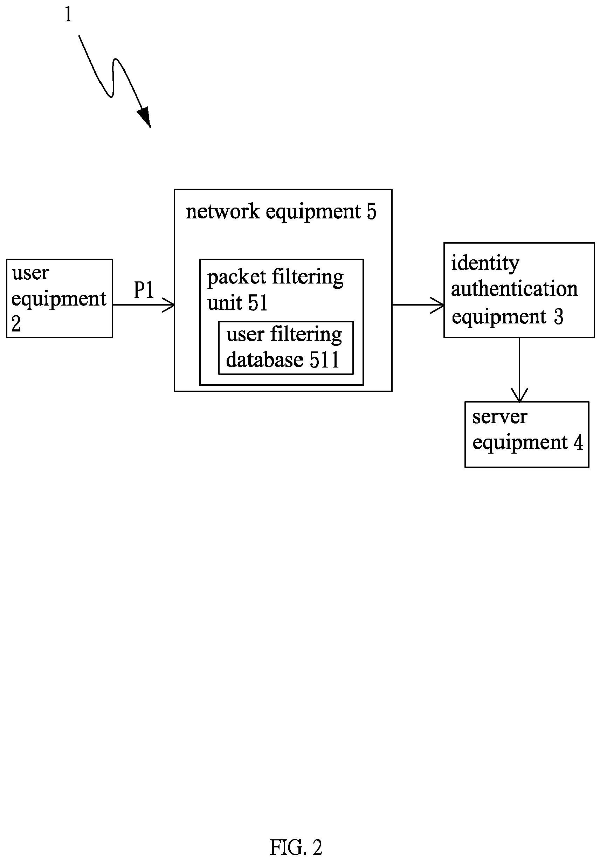

Please refer to FIG. 1 and FIG. 2 for a schematic diagram of a system architecture of an artificial intelligence system for defending against cyber attacks and a schematic diagram illustrating implementation of the system architecture of the artificial intelligence system for defending against cyber attacks according to the invention. It can be clearly seen from the figures that an artificial intelligence system 1 for defending against cyber attacks comprises at least one user equipment 2, an identity authentication equipment 3, a server equipment 4, and a network equipment 5, wherein the identity authentication equipment 3, the server equipment 4, and the network equipment 5 can be an independent equipment respectively or integrated in a single equipment. The network equipment 5 is connected between the user equipment 2 and the identity authentication equipment 3 by network, the user equipment 2 has a user equipment data and generates at least one network packet P1, the identity authentication equipment 3 is connected to the server equipment 4, and the identity authentication equipment 3 can be but is not limited to a router, a gateway, a repeater or a bridge.

The network equipment 5 has a packet filtering unit 51, the packet filtering unit 51 has at least one user filtering database 511, the user filtering database 511 records at least one user equipment data that transmits malicious packet data, and the packet filtering unit 51 captures the network packet P1 flowing from the user equipment 2 to the identity authentication equipment 3. After capturing the network packet PI, the packet filtering unit 51 first performs filtering according to data of the user equipment 2 in the user filtering database 511. If the user equipment 2 that transmits the network packet P1 is in the data of the user equipment 2 that is recorded as malicious packet data, the packet filtering unit 51 will filter the network packet P1. On the contrary, if the user equipment 2 that transmits the network packet P1 is not in the data of the user equipment 2 that is recorded as malicious packet data, the packet filtering unit 51 transmits the captured network packet P1 to the identity authentication equipment 3. The identity authentication equipment 3 receives the network packet P1 and authenticates an identity of the user equipment 2 that generates the network packet PI, and transmits the network packet P1 to the server equipment 4 according to the identity authentication result. The identity authentication equipment 3 mainly performs authentication by security protocol Transport Layer Security (TLS) or Secure Sockets Layer (SSL) with secured Internet communications or by other identity authentication methods. Therefore, the identity authentication equipment 3 performs identity authentication on the user equipment 2 that transmits the network packet P1. If the identity authentication equipment 3 succeeds in authentication, the identity authentication equipment 3 transmits the network packet P1 to the server equipment 4. If the identity authentication equipment 3 fails in authentication, the network packet P1 will not be transmitted to the server equipment 4.

Thereby, the artificial intelligence system 1 for defending against cyber attacks is capable of quickly identifying and filtering the network packet P1 with attack behaviors, so that there is no need to add equipment or build more complicated equipment in order to reduce installation costs, and also capable of avoiding the problem of consuming a large amount of computing resources caused by the identity authentication equipment 3 being maliciously attacked by the user equipment 2 that generates the malicious network packet P1, and thereby capable of blocking cyber attacks by further filtering using the identity authentication equipment 3 so that packets reaching the server equipment 4 are normal packets.

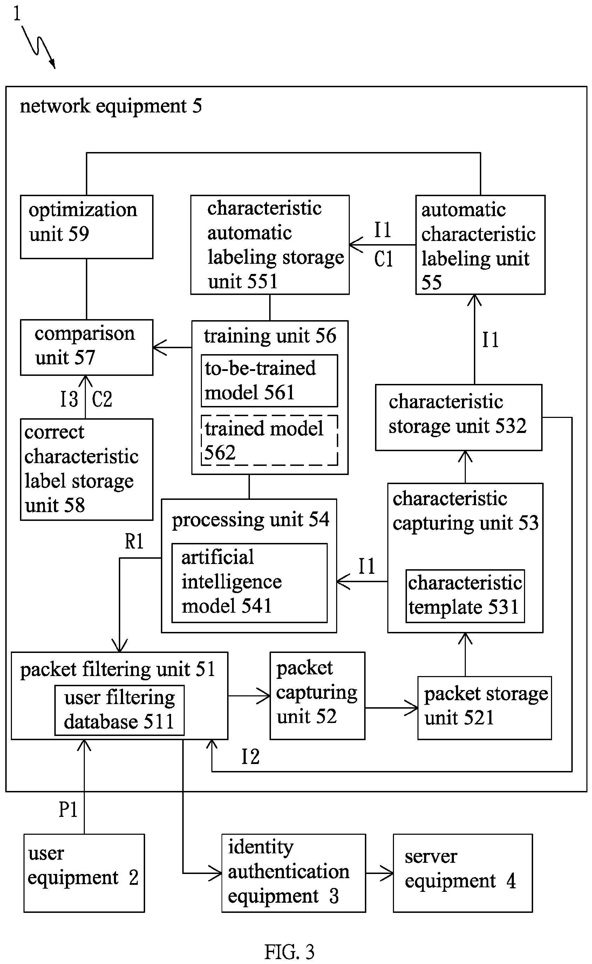

Please refer to FIG. 3 for a schematic diagram illustrating implementation of another system architecture of the artificial intelligence system for defending against cyber attacks according to the invention, wherein the network equipment 5 further comprises a packet capturing unit 52, a packet storage unit 521, a characteristic capturing unit 53 and a processing unit 54 connected in sequence, and the processing unit 54 is connected to the packet filtering unit 51.

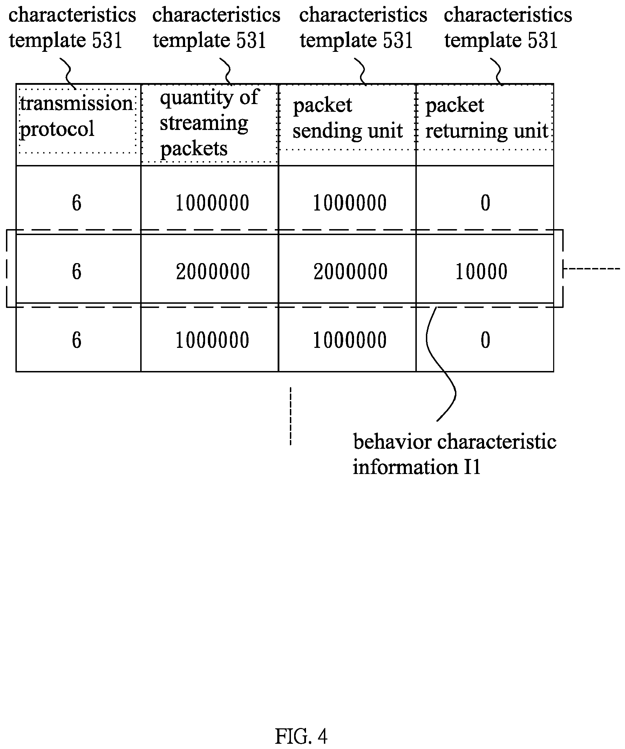

While the identity authentication equipment 3 transmits the network packet P1 to the server equipment 4, the packet capturing unit 52 captures the network packet P1 transmitted to the identity authentication equipment 3, and the packet capturing unit 52 stores the captured network packet P1 in the packet storage unit 521. The characteristic capturing unit 53 captures the network packet P1 in the packet storage unit 521, and the characteristic capturing unit 53 uses at least one characteristic template 531 to analyze the network packet P1 and generates a behavior characteristic information I1 and a packet information 12 of the network packet PI, wherein the characteristic template 531 is capable of analyzing according to each of the network packets PI, a fixed number of the network packets PI, or the network packets P1 obtained in a fixed period of time in order to obtain the behavior characteristic information I1. The characteristic template 531 comprises transmission protocol, number of capture, header information, transmission port number, transmission time, packet content, transmission speed, transmission direction, number of times of TCP flags, receiving end, number of packets, packet size, inter arrival time, active time of data stream, idle time of data stream of the network packet P1 of the user equipment 2 or the server equipment 4. As shown in FIG. 4, wherein the characteristic capturing unit 53 obtains the behavior characteristic information I1 of the network packet P1 through the characteristic template 531. In FIG. 4, contents of the behavior characteristic information I1 and the characteristic template 531 are shown, the behavior characteristic information I1 is a set of quantitative data., matrices, or images. The characteristic template 531 is not limited to four sets as shown in the embodiment of FIG. 4.

Wherein after the characteristic capturing unit 53 generates the behavior characteristic information I1 and the packet information 12, the characteristic capturing unit 53 transmits the behavior characteristic information I1 to the processing unit 54, and transmits the behavior characteristic information I1 and the packet information 12 to a characteristic storage unit 532 for storage. Contents of the packet information 12 are the Internet Protocol Address (IP Address) of the network packet P1 and the corresponding behavior characteristic information I1. The characteristic storage unit 532 is further connected to the packet filtering unit 51, an artificial intelligence model 541 of the processing unit 54 determines whether the behavior characteristic information I1 of the network packet P1 is normal or malicious and generates a characteristic information result R1, wherein the artificial intelligence model 541 is composed of artificial intelligence algorithms, artificial intelligence algorithms can be but not only comprise artificial neural network, decision tree, perceptron, support vector machine, integrated learning, dimensionality reduction and metric learning, clustering, Bayes classifier or feedforward neural network model. The processing unit 54 transmits the characteristic information result R1 of the malicious network packet P1 to the packet filtering unit 51, the packet filtering unit 51 receives the characteristic information result R1, the packet filtering unit 51 further receives the packet information 12 of the characteristic storage unit 532, the packet filtering unit 51 learns the user equipment data that generates the malicious network packet P1 through the characteristic information result R1 and the packet information 12, and the packet filtering unit 51 stores the user equipment data of the malicious network packet P1 in the user filtering database 511, so that when the user equipment 2 that generates the malicious network packet P1 transmits the network packet P1 to the server equipment 4 again, the packet filtering unit 51 captures the network packet PI, and performs filtering according to data of the user equipment 2 in the user filtering database 511 first. On the contrary, if the artificial intelligence model 541 of the processing unit 54 determines that the behavior characteristic information I1 of the network packet P1 is normal, the characteristic information result R1 is generated. The packet filtering unit 51 transmits the network packet P1 generated by the user equipment 2 that generates the normal network packet P1 to the identity authentication equipment 3. If the identity authentication equipment 3 succeeds in authentication, the identity authentication equipment 3 transmits the network packet P1 to the server equipment 4. For example, the artificial intelligence model 541 determines that the behavior characteristic information I1 is an attack characteristic or a normal characteristic, and transmits the characteristic information result R1 (the characteristic information I1 is an attack characteristic or a normal characteristic) to the packet filtering unit 51. The packet filtering unit 51 obtains the Internet Protocol Address (IP Address) of the network packet P1 and determines whether it is an attack characteristic according to the characteristic information result R1 and the packet information 12. If the characteristic information result R1 is an attack, the Internet Protocol Address (IP Address) of the network packet P1, that is, the user equipment data of the malicious network packet PI, is stored and blacklisted in the user filtering database 511, and packets of the same Internet Protocol Address (IP Address) will be filtered by the packet filtering unit 51 in the future. Thereby, the artificial intelligence system 1 for defending against cyber attacks is capable of quickly identifying and filtering the network packet P1 with attack behaviors by using the artificial intelligence model 541, so that there is no need to add equipment or build more complicated equipment in order to reduce installation costs, and the identity authentication equipment 3 is capable of determining whether the network packet P1 is normal or malicious based on the behavioral characteristic information I1 analyzed by the characteristic template 531 through the artificial intelligence model 541 before an identity authentication stage, and the identity authentication equipment 3 is capable of avoiding the problem of consuming a large amount of computing resources caused by being maliciously attacked by the user equipment 2 that generates the malicious network packet P1.

In addition, the network equipment 5 further comprises an automatic characteristic labeling unit 55, a characteristic automatic labeling storage unit 551, a training unit 56, a comparison unit 57, a correct characteristic label storage unit 58 and an optimization unit 59.

The automatic characteristic labeling unit 55 is connected to the characteristic storage unit 532, the automatic characteristic labeling unit 55 captures the behavior characteristic information I1 in the characteristic storage unit 532, and the automatic characteristic labeling unit 55 labels the behavior characteristic information I1, so that the behavior characteristic information I1 has a characteristic automatic classification label C1. Further, the behavior characteristic information I1 is classified as a normal characteristic or a malicious characteristic by the automatic characteristic labeling unit 55, wherein the automatic characteristic labeling unit 55 can be a classifier with classification algorithm, the classification algorithm can be but not only comprise logistic regression, decision tree, support vector machine (SVM), Naive Bayes, k-nearest neighbors algorithm (k-NN), and the automatic characteristic labeling unit 55 transmits the behavior characteristic information I1 and the characteristic automatic classification label C1 to which the behavior characteristic information I1 belongs to the characteristic automatic labeling storage unit 551. The characteristic automatic labeling storage unit 551 stores the behavior characteristic information I1 and the characteristic automatic classification label C1 to which the behavior characteristic information I1 belongs. The training unit 56 is connected to the characteristic automatic labeling storage unit 551, the training unit 56 captures the behavior characteristic information I1 and the characteristic automatic classification label C1 to which the behavior characteristic information I1 belongs in the characteristic automatic labeling storage unit 551. The training unit 56 has a to-be-trained model 561, wherein the to-be-trained model 561 is composed of artificial intelligence algorithms, and the training unit 56 captures the behavior characteristic information I1 and the characteristic automatic classification label C1 to which the behavior characteristic information I1 belongs through the to-be-trained model 561, and the to-be-trained model 561 generates a trained model 562 through the behavior characteristic information I1 and the characteristic automatic classification label C1 to which the behavior characteristic information I1 belongs.

The comparison unit 57 is connected to the training unit 56, the correct characteristic label storage unit 58 and the optimization unit 59, and the correct characteristic label storage unit 58 stores at least one training characteristic information 13 and a correct characteristic classification label C2 of the training characteristic information 13. The training characteristic information 13 and the correct characteristic classification label C2 are both generated outside the artificial intelligence system 1 and pre-stored in the correct characteristic label storage unit 58. Wherein the training characteristic information 12 is equivalent to the behavior characteristic information I1, and the correct characteristic classification label C2 indicates that the training characteristic information 12 is a normal characteristic or an attack characteristic, and the training characteristic information 13 and the correct characteristic classification label C2 can be generated and labeled manually or by equipment. Further, classification of the correct characteristic classification label C2 is correct, which is a standard answer, and the trained model 562 of the training unit 56 is output to the comparison unit 57. The comparison unit 57 further captures the training characteristic information 13 and the correct characteristic classification label C2 of the correct characteristic label storage unit 58, and the trained model 562 captures the training characteristic information 13 in the comparison unit 57 and outputs a training information result R2. The comparison unit 57 compares the training information result R2 with the training characteristic information 13 and the correct characteristic classification label C2, the comparison unit 57 compares whether the classification labels of the training information result R2 match with the training characteristic information 13 and the correct characteristic classification label C2, if a matching rate between the training information result R2 and the training characteristic information 13 and the correct characteristic classification label C2 is higher than a set value, the comparison unit 57 outputs the trained model 562 to the processing unit 54, and the trained model 562 updates the artificial intelligence model 541. On the contrary, if a matching rate between the training information result R2 and the training characteristic information 13 and the correct characteristic classification label C2 is lower than a set value, the comparison unit 57 determines to optimize the trained model 562. For example, the two training characteristic information (A) and (B) are preset, the correct characteristic classification label C2 corresponding to (A) is normal (○), the correct characteristic classification label C2 corresponding to (B) is attack (X); after (A) and (B) are input to the trained model 562, the training information result R2 of the training characteristic information (A) output by the trained model 562 is normal (○), and the training information result R2 of the training characteristic information (B) output by the trained model 562 is normal (○). At this time, the comparison unit 57 compares the training information result R2 with the correct characteristic classification label C2. In this embodiment, the training information result R2 of (A) is normal (○) and the correct characteristic classification label C2 is normal (○), which conforms to default, and the training information result R2 of (B) is normal (○), but the correct characteristic classification label C2 is attack (X), which does not meet default, so a correct rate of determination by the trained model 562 is 50%. If a set value needs to be greater than 90%, then the comparison unit 57 determines to adjust the automatic characteristic labeling unit 55, so a set value is not limited to be greater than 90%, which can be adjusted according to actual condition. The optimization unit 59 optimizes the automatic characteristic labeling unit 55, and the optimization unit 59 performs optimization by using classification algorithm, so that the automatic characteristic labeling unit 55 uses another algorithm or replaces labeling parameters to generate the other characteristic automatic classification label C1 for the behavior characteristic information I1. The characteristic automatic labeling storage unit 551 stores the behavior characteristic information I1 and the other characteristic automatic classification label C1 to which the behavior characteristic information I1 belongs, and the to-be-trained model 561 of the training unit 56 captures the behavior characteristic information I1 and the characteristic automatic classification label C1 to which the behavior characteristic information I1 belongs and outputs the other trained model 562 to the comparison unit 57.

The comparison unit 57 further captures the training characteristic information 13 and the correct characteristic classification label C2 of the correct characteristic label storage unit 58, and the trained model 562 captures the training characteristic information 13 in the comparison unit 57 and outputs the other training information result R2. The comparison unit 57 compares the other training information result R2 with the training characteristic information 13 and the correct characteristic classification label C2, the comparison unit 57 compares whether the classification labels of the other training information result R2 match with the training characteristic information 13 and the correct characteristic classification label C2, if a matching rate between the training information result R2 and the training characteristic information 13 and the correct characteristic classification label C2 is higher than a set value, the comparison unit 57 outputs the other trained model 562 to the processing unit 54, and the trained model 562 updates the artificial intelligence model 541. On the contrary, if a matching rate between the other training information result R2 and the training characteristic information 13 and the correct characteristic classification label C2 is lower than a set value, the comparison unit 57 adjusts the characteristic automatic classification label C1 again until a matching rate between the training information result R2 and the training characteristic information 13 and the correct characteristic classification label C2 is higher than a set value.

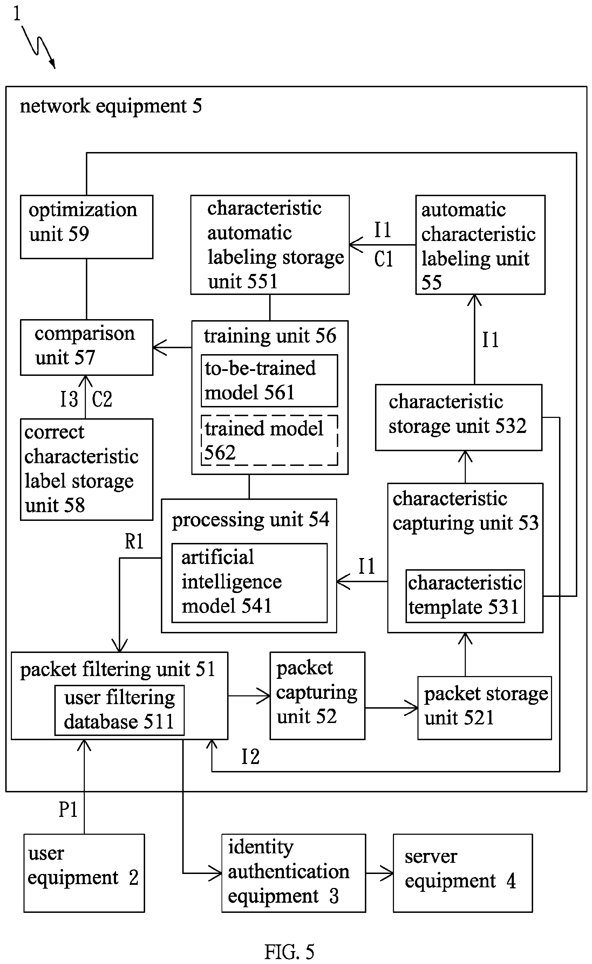

Please refer to FIG. 5 for a schematic diagram illustrating implementation of optimization of another system architecture of the artificial intelligence system for defending against cyber attacks according to the invention. Wherein the optimization unit 59 has another optimization mode, wherein the optimization unit 59 is connected to the characteristic capturing unit 53, so that when the comparison unit 57 determines to optimize the trained model 562, the optimization unit 59 makes the characteristic capturing unit 53 use the other characteristic template 531. The characteristic capturing unit 53 generates the other behavioral characteristic information I1 according to the other characteristic template 531 to change a quantity or items of the characteristic template 531 for the optimization unit 59, so that the characteristic capturing unit 53 obtains the other behavioral characteristic information I1 of the network packet P1 through the characteristic template 531, causing the automatic characteristic labeling unit 55 to generate the other characteristic automatic classification label C1 by the other behavior characteristic information I1.

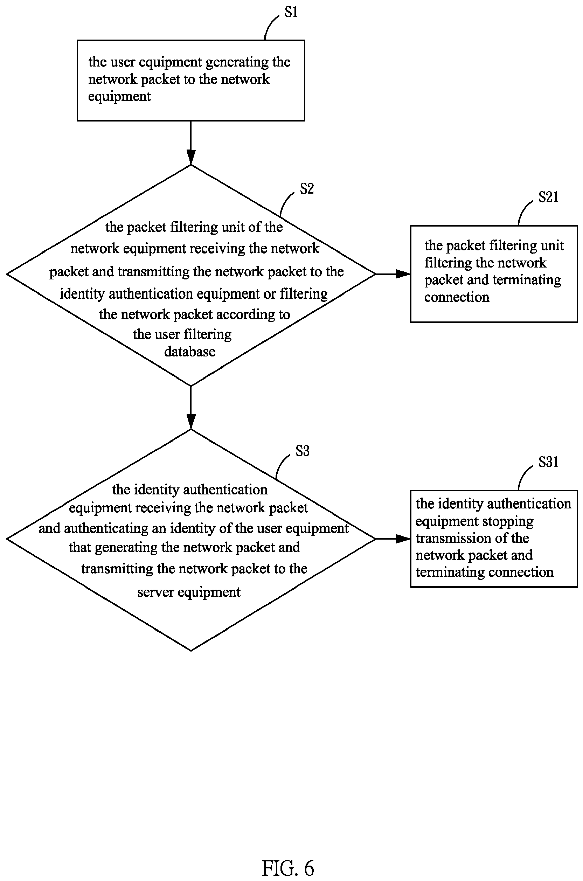

In order to clearly illustrate an operation process of this embodiment, please refer to FIG. 6 for a flow chart of an artificial intelligence method for defending against cyber attacks according to the invention. The artificial intelligence method for defending against cyber attacks comprises following steps:
step S1: a user equipment 2 generating a network packet P1 to a network equipment 5;
step S2: a packet filtering unit 51 of the network equipment 5 receiving the network packet P1 and transmitting the network packet P1 to an identity authentication equipment 3 or filtering the network packet P1 according to a user filtering database 511; the packet filtering unit 51 has the user filtering database 511, the user filtering database 511 records at least one user equipment 2 data that transmits malicious packet data, and the packet filtering unit 51 captures the network packet P1 flowing from the user equipment 2 to the identity authentication equipment 3, after capturing the network packet PI, the packet filtering unit 51 first performs filtering according to data of the user equipment 2 in the user filtering database 511, if the user equipment 2 that transmits the network packet P1 is not in the data of the user equipment 2 that is recorded as malicious packet data, the packet filtering unit 51 transmits the captured network packet P1 to the identity authentication equipment 3, otherwise, proceeding to step S21: the packet filtering unit 51 filtering the network packet P1 and terminating connection; if the user equipment 2 that transmits the network packet P1 is in the data of the user equipment 2 that is recorded as malicious packet data, the packet filtering unit 51 filters the network packet P1 and terminates connection of the user equipment 2; and
step S3: the identity authentication equipment 3 receiving the network packet PI, and authenticating an identity of the user equipment 2 that generating the network packet PI, and transmitting the network packet P1 to a server equipment 4 according to an identity authentication result; wherein the identity authentication equipment 3 performs identity authentication on the user equipment 2 that transmits the network packet P1, if the identity authentication equipment 3 succeeds in authentication, the identity authentication equipment 3 transmits the network packet P1 to the server equipment 4, otherwise, proceeding to step S31: the identity authentication equipment 3 stopping transmission of the network packet P1 and terminating connection; if the identity authentication equipment 3 fails in authentication, the network packet P1 will not be transmitted to the server equipment 4.

Thereby, the artificial intelligence system 1 for defending against cyber attacks is capable of quickly identifying and filtering the network packet P1 with attack behaviors, so that there is no need to add equipment or build more complicated equipment in order to reduce installation costs, and by further authenticating identity using the identity authentication equipment 3 is capable of avoiding the problem of consuming a large amount of computing resources caused by being maliciously attacked by the user equipment 2 that generates the malicious network packet P1.

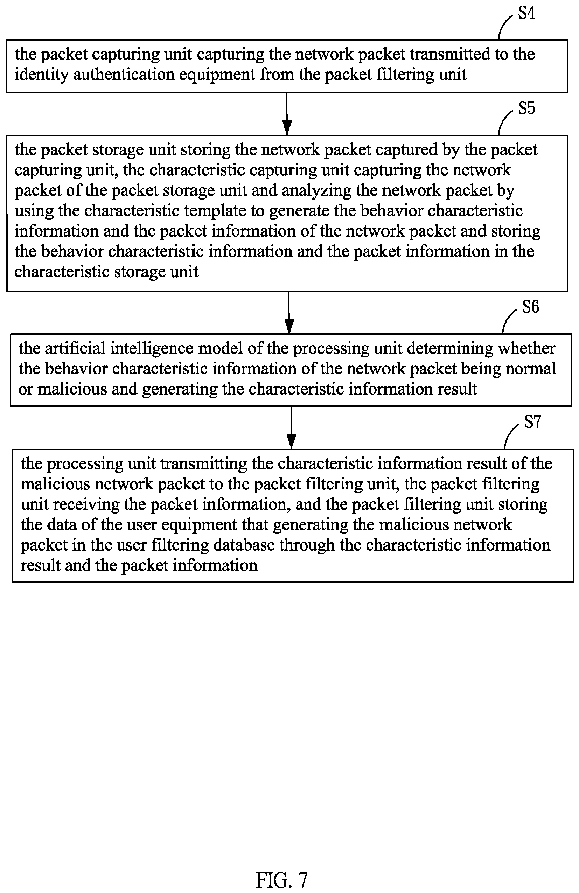

Please refer to FIG. 7 for a further flow chart of the artificial intelligence method for defending against cyber attacks according to the invention. Wherein the method comprises following steps after the step S3:
step S4: a packet capturing unit 52 capturing the network packet P1 transmitted to the identity authentication equipment 3 from the packet filtering unit 51; while the identity authentication equipment 3 transmits the network packet P1 to the server equipment 4, the packet capturing unit 52 captures the network packet P1 transmitted to the identity authentication equipment 3;
step S5: a packet storage unit 521 storing the network packet P1 captured by the packet capturing unit 52, a characteristic capturing unit 53 capturing the network packet P1 of the packet storage unit 521 and analyzing the network packet P1 by using a characteristic template 531 to generate a behavior characteristic information I1 and a packet information 12 of the network packet P1 and storing the behavior characteristic information I1 and the packet information 12 in a characteristic storage unit 532; the packet capturing unit 52 stores the captured network packet P1 in the packet storage unit 521, the characteristic capturing unit 53 captures the network packet P1 in the packet storage unit 521, and the characteristic capturing unit 53 uses the characteristic template 531 to analyze the network packet P1 and generates the behavior characteristic information I1 and the packet information 12 of the network packet PI, and the behavior characteristic information I1 and the packet information 12 generated by the characteristic capturing unit 53 are stored in the characteristic storage unit 532;
step S6: an artificial intelligence model 541 of a processing unit 54 determining whether the behavior characteristic information I1 of the network packet P1 being normal or malicious and generating a characteristic information result R1; wherein after the characteristic capturing unit 53 generates the behavior characteristic information I1, the characteristic capturing unit 53 transmits the behavior characteristic information I1 to the processing unit 54, the artificial intelligence model 541 of the processing unit 54 determines whether the behavior characteristic information I1 of the network packet P1 is normal or malicious and generates the characteristic information result R1; and
step S7: the processing unit 54 transmitting the characteristic information result R1 of the malicious network packet P1 to the packet filtering unit 51, the packet filtering unit 51 receiving the packet information 12, and the packet filtering unit 51 storing the data of the user equipment 2 that generating the malicious network packet P1 in the user filtering database 511 through the characteristic information result R1 and the packet information 12; the packet filtering unit 51 receives the characteristic information result R1, the packet filtering unit 51 receives the packet information 12 of the characteristic storage unit 532, the packet filtering unit 51 learns the user equipment data (i.e., the behavior characteristic information I1 corresponding to the Internet Protocol Address, IP Address) that generates the malicious network packet P1 through the characteristic information result R1 (whether the behavior characteristic information I1 is an attack or normal) and the packet information 12 (i.e., the packet information 12 corresponding to the Internet Protocol Address, IP Address), and the packet filtering unit 51 stores the user equipment data of the malicious network packet P1 in the user filtering database 511, so that when the user equipment 2 that generates the malicious network packet P1 transmits the network packet P1 to the server equipment 4 again, the packet filtering unit 51 captures the network packet P1, and performs filtering according to data of the user equipment 2 in the user filtering database 511 first. On the contrary, if the artificial intelligence model 541 of the processing unit 54 determines that the behavior characteristic information I1 of the network packet P1 is normal, the characteristic information result R1 is generated. The packet filtering unit 51 transmits the network packet P1 generated by the user equipment 2 that generates the normal network packet P1 to the identity authentication equipment 3.

Thereby, the artificial intelligence system 1 for defending against cyber attacks is capable of quickly identifying and filtering the network packet P1 with attack behaviors by using the artificial intelligence model 541, so that there is no need to add equipment or build more complicated equipment in order to reduce installation costs, and the identity authentication equipment 3 is capable of determining whether the network packet P1 is normal or malicious based on the behavioral characteristic information I1 analyzed by the characteristic template 531 through the artificial intelligence model 541 before an identity authentication stage, and the packet filtering unit 51 is further capable of storing the data of the user equipment 2 that generates the malicious network packet P1 in the user filtering database 511 through the characteristic information result R1 and the packet information 12 to avoid the problem of consuming a large amount of computing resources caused by being maliciously attacked by the user equipment 2 that generates the malicious network packet P1.

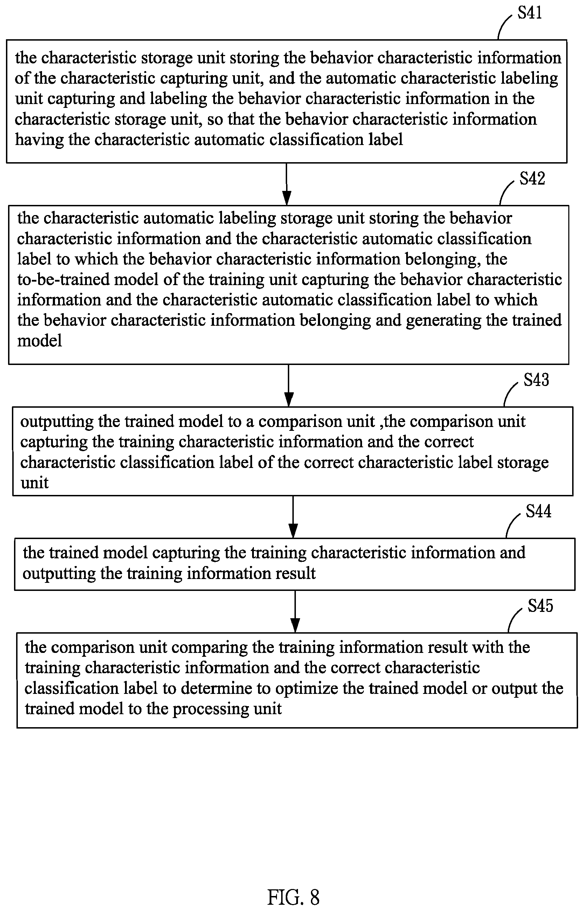

Please refer to FIG. 8 for a flow chart of comparing by the artificial intelligence method for defending against cyber attacks according to the invention. Wherein the step of the characteristic capturing unit 53 capturing the network packet P1 of the packet storage unit 521 and analyzing the network packet P1 by using the characteristic template 531 to generate the behavior characteristic information I1 and the packet information 12 of the network packet P1 comprises:
step S41: the characteristic storage unit 532 storing the behavior characteristic information I1 of the characteristic capturing unit 53, and an automatic characteristic labeling unit 55 capturing and labeling the behavior characteristic information I1 in the characteristic storage unit 532, so that the behavior characteristic information I1 having a characteristic automatic classification label C1; the characteristic storage unit 532 stores the behavioral characteristic information I1 generated by the characteristic capturing unit 53, the automatic characteristic labeling unit 55 captures the behavior characteristic information I1 in the characteristic storage unit 532, and the automatic characteristic labeling unit 55 labels the behavior characteristic information I1, so that the behavior characteristic information I1 has the characteristic automatic classification label C1;
step S42: a characteristic automatic labeling storage unit 551 storing the behavior characteristic information I1 and the characteristic automatic classification label C1 to which the behavior characteristic information I1 belonging, a to-be-trained model 561 of a training unit 56 capturing the behavior characteristic information I1 and the characteristic automatic classification label C1 to which the behavior characteristic information I1 belonging and generating a trained model 562; the automatic characteristic labeling unit 55 transmits the behavior characteristic information I1 and the characteristic automatic classification label C1 to which the behavior characteristic information I1 belongs to the characteristic automatic labeling storage unit 551, the characteristic automatic labeling storage unit 551 stores the behavior characteristic information I1 and the characteristic automatic classification label C1 to which the behavior characteristic information I1 belongs, the training unit 56 captures the behavior characteristic information I1 and the characteristic automatic classification label C1 to which the behavior characteristic information I1 belongs in the characteristic automatic labeling storage unit 551, and the training unit 56 captures the behavior characteristic information I1 and the characteristic automatic classification label C1 to which the behavior characteristic information I1 belongs through the to-be-trained model 561, and the to-be-trained model 561 generates a trained model 562 through the behavior characteristic information I1 and the characteristic automatic classification label C1 to which the behavior characteristic information I1 belongs;
step S43: outputting the trained model 562 to a comparison unit 57, the comparison unit 57 capturing a training characteristic information 13 and a correct characteristic classification label C2 of a correct characteristic label storage unit 58; wherein the trained model 562 is output to the comparison unit 57, the comparison unit 57 further captures the training characteristic information 13 and the correct characteristic classification label C2 of the correct characteristic label storage unit 58;
step S44: the trained model 562 capturing the training characteristic information 13 and outputting a training information result R2; the trained model 562 captures the training characteristic information 13 in the comparison unit 57 and outputs the training information result R2; and
step S45: the comparison unit 57 comparing the training information result R2 with the training characteristic information 13 and the correct characteristic classification label C2 to determine to optimize the trained model 562 or output the trained model 562 to the processing unit 54; the comparison unit 57 compares the training information result R2 with the training characteristic information 13 and the correct characteristic classification label C2, the comparison unit 57 compares whether the classification labels of the training information result R2 match with the training characteristic information 13 and the correct characteristic classification label C2, if a matching rate between the training information result R2 and the training characteristic information 13 and the correct characteristic classification label C2 is higher than a set value, the comparison unit 57 outputs the trained model 562 to the processing unit 54.

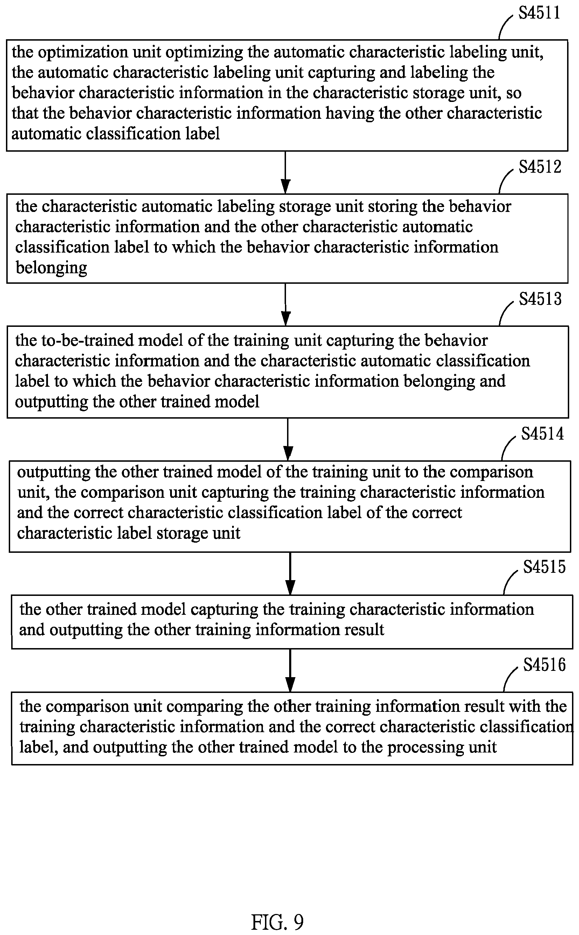

Please refer to FIG. 9 for a flow chart of optimizing by the artificial intelligence method for defending against cyber attacks according to the invention. Wherein the step of the comparison unit 57 comparing the training information result R2 with the training characteristic information 13 and the correct characteristic classification label C2 to determine to optimize the trained model 562 comprises:
step S4511: an optimization unit 59 optimizing the automatic characteristic labeling unit 55, the automatic characteristic labeling unit 55 capturing and labeling the behavior characteristic information I1 in the characteristic storage unit 532, so that the behavior characteristic information I1 having the other characteristic automatic classification label C1; if a matching rate between the training information result R2 and the training characteristic information 13 and the correct characteristic classification label C2 is lower than a set value, the comparison unit 57 determines to optimize the trained model 562, the optimization unit 59 optimizes the automatic characteristic labeling unit 55, and the optimization unit 59 performs optimization by using classification algorithm, so that the automatic characteristic labeling unit 55 uses another algorithm or replaces labeling parameters to generate the other characteristic automatic classification label C1 for the behavior characteristic information I1;
step S4512: the characteristic automatic labeling storage unit 551 storing the behavior characteristic information I1 and the other characteristic automatic classification label C1 to which the behavior characteristic information I1 belonging;
step S4513: the to-be-trained model 561 of the training unit 56 capturing the behavior characteristic information I1 and the characteristic automatic classification label C1 to which the behavior characteristic information I1 belonging and outputting the other trained model 562;
step S4514: outputting the other trained model 562 of the training unit 56 to the comparison unit 57, the comparison unit 57 further capturing the training characteristic information 13 and the correct characteristic classification label C2 of the correct characteristic label storage unit 58;
step S4515: the other trained model 562 capturing the training characteristic information 13 in the comparison unit 57 and outputting the other training information result R2; and
step S4516: the comparison unit 57 comparing the other training information result R2 with the training characteristic information 13 and the correct characteristic classification label C2, and outputting the other trained model 562 to the processing unit 54; the comparison unit 57 compares the other training information result R2 with the training characteristic information 13 and the correct characteristic classification label C2, the comparison unit 57 compares whether the classification labels of the other training information result R2 match with the training characteristic information 13 and the correct characteristic classification label C2, if a matching rate between the training information result R2 and the training characteristic information 13 and the correct characteristic classification label C2 is higher than a set value, the comparison unit 57 outputs the other trained model 562 to the processing unit 54, and the trained model 562 updates the artificial intelligence model 541, on the contrary, if a matching rate between the other training information result R2 and the training characteristic information 13 and the correct characteristic classification label C2 is lower than a set value, the comparison unit 57 adjusts the characteristic automatic classification label C1 again until a matching rate between the training information result R2 and the training characteristic information 13 and the correct characteristic classification label C2 is higher than a set value.

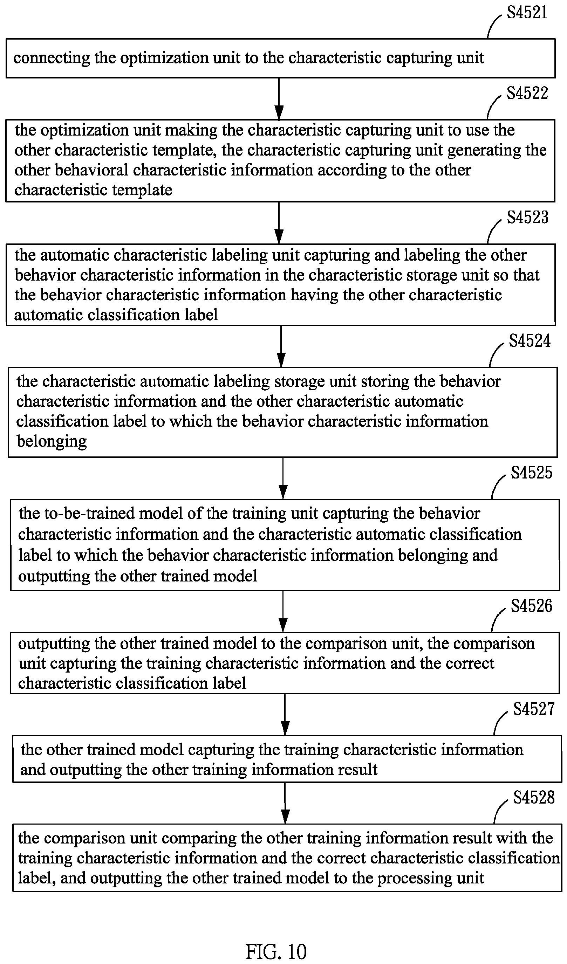

Please refer to FIG. 10 for a flow chart of another optimizing by the artificial intelligence method for defending against cyber attacks according to the invention. Wherein the step of the comparison unit 57 comparing the training information result R2 with the training characteristic information 13 and the correct characteristic classification label C2 to determine to optimize the trained model 562 comprises:
step S4521: connecting the optimization unit 59 to the characteristic capturing unit 53;
step S4522: the optimization unit 59 making the characteristic capturing unit 53 to use the other characteristic template 531, the characteristic capturing unit 53 generating the other behavioral characteristic information I1 according to the other characteristic template 531; so that when the comparison unit 57 determines to optimize the trained model 562, the optimization unit 59 makes the characteristic capturing unit 53 use the other characteristic template 531; the characteristic capturing unit 53 generates the other behavioral characteristic information I1 according to the other characteristic template 531 to change a quantity or items of the characteristic template 531 for the optimization unit 59, so that the characteristic capturing unit 53 obtains the other behavioral characteristic information I1 of the network packet P1 through the characteristic template 531;
step S4523: the automatic characteristic labeling unit 55 capturing and labeling the other behavior characteristic information I1 in the characteristic storage unit 532 so that the behavior characteristic information I1 having the other characteristic automatic classification label C1; causing the automatic characteristic labeling unit 55 to generate the other characteristic automatic classification label C1 by the other behavior characteristic information I1;
step S4524: the characteristic automatic labeling storage unit 551 storing the behavior characteristic information I1 and the other characteristic automatic classification label C1 to which the behavior characteristic information I1 belonging;
step S4525: the to-be-trained model 561 of the training unit 56 capturing the behavior characteristic information I1 and the characteristic automatic classification label C1 to which the behavior characteristic information I1 belonging and outputting the other trained model 562;
step S4526: outputting the other trained model 562 of the training unit 56 to the comparison unit 57, the comparison unit 57 further capturing the training characteristic information 13 and the correct characteristic classification label C2 of the correct characteristic label storage unit 58;
step S4527: the other trained model 562 capturing the training characteristic information 13 in the comparison unit 57 and outputting the other training information result R2; and
step S4528: the comparison unit 57 comparing the other training information result R2 with the training characteristic information 13 and the correct characteristic classification label C2, and outputting the other trained model 562 to the processing unit 54; the comparison unit 57 compares the other training information result R2 with the training characteristic information 13 and the correct characteristic classification label C2, the comparison unit 57 compares whether the classification labels of the other training information result R2 match with the training characteristic information 13 and the correct characteristic classification label C2, if a matching rate between the training information result R2 and the training characteristic information 13 and the correct characteristic classification label C2 is higher than a set value, the comparison unit 57 outputs the other trained model 562 to the processing unit 54, and the trained model 562 updates the artificial intelligence model 541, on the contrary, if a matching rate between the other training information result R2 and the training characteristic information 13 and the correct characteristic classification label C2 is lower than a set value, the comparison unit 57 adjusts the characteristic automatic classification label C1 again until a matching rate between the training information result R2 and the training characteristic information 13 and the correct characteristic classification label C2 is higher than a set value.

Thereby, the artificial intelligence system 1 for defending against cyber attacks is capable of quickly identifying and filtering the network packet P1 with attack behaviors by using the artificial intelligence model 541, so that there is no need to add equipment or build more complicated equipment in order to reduce installation costs, and the identity authentication equipment 3 is capable of determining whether the network packet P1 is normal or malicious based on the behavioral characteristic information I1 analyzed by the characteristic template 531 through the artificial intelligence model 541 before an identity authentication stage, and the packet filtering unit 51 is further capable of storing the data of the user equipment 2 that generates the malicious network packet P1 in the user filtering database 511 through the characteristic information result R1 and the packet information 12 to avoid the problem of consuming a large amount of computing resources caused by being maliciously attacked by the user equipment 2 that generates the malicious network packet P1.

The above-mentioned embodiments are merely exemplification to illustrate the principles and efficacies of the invention, and are not used to limit the invention. Any person having ordinary skill in the art can modify the above-mentioned embodiments without departing from the spirit and scope of the invention. Therefore, the scope of protection of the rights of the invention should be as listed in the appended claims hereinafter.

## Claims

1. An artificial intelligence system for defending against cyber attacks comprising:
at least one user equipment, the user equipment having a user equipment data and generating at least one network packet; and
a network equipment, the network equipment being connected to the user equipment, the network equipment having a packet filtering unit, the packet filtering unit having at least one user filtering database, the packet filtering unit receiving the network packet and transmitting the network packet to an identity authentication equipment or filtering the network packet according to the user filtering database;
the identity authentication equipment receiving the network packet, and authenticating an identity of the user equipment that generating the network packet, and transmitting the network packet to a server equipment according to an identity authentication result.

2. The artificial intelligence system for defending against cyber attacks as claimed in claim 1, wherein the network equipment further comprises:
a packet capturing unit, the packet capturing unit is connected to the packet filtering unit and captures the network packet transmitted to the identity authentication equipment;
a packet storage unit, the packet storage unit is connected to the packet capturing unit and stores the network packet;
a characteristic capturing unit, the characteristic capturing unit is connected to the packet storage unit and captures the network packet and analyzes the network packet by using at least one characteristic template to generate a behavior characteristic information and a packet information of the network packet;
a characteristic storage unit, the characteristic storage unit is connected to the characteristic capturing unit and stores the behavior characteristic information and the packet information; and
a processing unit, the processing unit is connected to the characteristic capturing unit and receives its behavior characteristic information, an artificial intelligence model of the processing unit determines whether the behavior characteristic information of the network packet is normal or malicious and generates a characteristic information result, the processing unit transmits the characteristic information result of the malicious network packet to the packet filtering unit, the packet filtering unit receives the packet information of the characteristic storage unit, and the packet filtering unit stores the user equipment data that generates the malicious network packet in the user filtering database through the characteristic information result and the packet information.

3. The artificial intelligence system for defending against cyber attacks as claimed in claim 2, wherein the network equipment further comprises an automatic characteristic labeling unit and a characteristic automatic labeling storage unit, the automatic characteristic labeling unit is connected to the characteristic storage unit, the automatic characteristic labeling unit captures and labels the behavior characteristic information in the characteristic storage unit, so that the behavior characteristic information has a characteristic automatic classification label, the characteristic automatic labeling storage unit is connected to the automatic characteristic labeling unit and stores the behavior characteristic information and the characteristic automatic classification label to which the behavior characteristic information belongs, the characteristic automatic labeling storage unit is connected to a training unit, and a to-be-trained model of the training unit captures the behavior characteristic information and the characteristic automatic classification label to which the behavior characteristic information belongs and generates a trained model.

4. The artificial intelligence system for defending against cyber attacks as claimed in claim 3, wherein the network equipment further comprises a comparison unit, the comparison unit is connected to the training unit and a correct characteristic label storage unit, the correct characteristic label storage unit stores at least one training characteristic information and a correct characteristic classification label of the training characteristic information, the comparison unit captures the training characteristic information and the correct characteristic classification label of the correct characteristic label storage unit, the training unit outputs the trained model to the comparison unit, the trained model captures the training characteristic information and outputs a training information result, and the comparison unit compares the training information result with the training characteristic information and the correct characteristic classification label to determine to optimize the trained model or output the trained model to the processing unit.

5. The artificial intelligence system for defending against cyber attacks as claimed in claim 4, wherein the network equipment further comprises an optimization unit, and the optimization unit is connected to the comparison unit to perform optimization when the comparison unit determines to optimize the trained model.

6. The artificial intelligence system for defending against cyber attacks as claimed in claim 5, wherein the optimization unit is further connected to the automatic characteristic labeling unit, so that when the comparison unit determines to optimize the trained model, the optimization unit optimizes the automatic characteristic labeling unit, and the automatic characteristic labeling unit generates the other characteristic automatic classification label.

7. The artificial intelligence system for defending against cyber attacks as claimed in claim 5, wherein the optimization unit is further connected to the characteristic capturing unit, so that when the comparison unit determines to optimize the trained model, the optimization unit makes the characteristic capturing unit to use the other characteristic template, and the characteristic capturing unit generates the other behavior characteristic information according to the other characteristic template.

8. An artificial intelligence method for defending against cyber attacks comprising:
at least one user equipment generating at least one network packet to a network equipment;
a packet filtering unit of the network equipment receiving the network packet and transmitting the network packet to an identity authentication equipment or filtering the network packet according to a user filtering database; and
the identity authentication equipment receiving the network packet, and authenticating an identity of the user equipment that generating the network packet, and transmitting the network packet to a server equipment according to an identity authentication result.

9. The artificial intelligence method for defending against cyber attacks as claimed in claim 8, wherein the step of the identity authentication equipment receiving the network packet, and authenticating an identity of the user equipment that generating the network packet, and transmitting the network packet to a server equipment according to an identity authentication result comprises:
a packet capturing unit capturing the network packet transmitted to the identity authentication equipment from the packet filtering unit;
a packet storage unit storing the network packet captured by the packet capturing unit, a characteristic capturing unit capturing the network packet of the packet storage unit and analyzing the network packet by using at least one characteristic template to generate a behavior characteristic information and a packet information of the network packet and storing the behavior characteristic information and the packet information in a characteristic storage unit;
an artificial intelligence model of a processing unit determining whether the behavior characteristic information of the network packet being normal or malicious and generating a characteristic information result; and
the processing unit transmitting the characteristic information result of the malicious network packet to the packet filtering unit, the packet filtering unit receiving the packet information of the characteristic storage unit, and the packet filtering unit storing the user equipment data that generating the malicious network packet in the user filtering database through the characteristic information result and the packet information.

10. The artificial intelligence method for defending against cyber attacks as claimed in claim 9, wherein the step of a characteristic capturing unit capturing the network packet of the packet storage unit and analyzing the network packet by using at least one characteristic template to generate a behavior characteristic information and a packet information of the network packet comprises:
a characteristic storage unit storing the behavior characteristic information of the characteristic capturing unit, and an automatic characteristic labeling unit capturing and labeling the behavior characteristic information in the characteristic storage unit, so that the behavior characteristic information having a characteristic automatic classification label;
a characteristic automatic labeling storage unit storing the behavior characteristic information and the characteristic automatic classification label to which the behavior characteristic information belonging, and a to-be-trained model of a training unit capturing the behavior characteristic information and the characteristic automatic classification label to which the behavior characteristic information belonging and generating a trained model;
outputting the trained model to a comparison unit, the comparison unit capturing a training characteristic information and a correct characteristic classification label of a correct characteristic label storage unit;
the trained model capturing the training characteristic information and outputting a training information result; and
the comparison unit comparing the training information result with the training characteristic information and the correct characteristic classification label to determine to optimize the trained model or output the trained model to the processing unit.

11. The artificial intelligence method for defending against cyber attacks as claimed in claim 10, wherein the step of the comparison unit comparing the training information result with the training characteristic information and the correct characteristic classification label to determine to optimize the trained model comprises:
an optimization unit optimizing the automatic characteristic labeling unit, the automatic characteristic labeling unit capturing and labeling the behavior characteristic information in the characteristic storage unit, so that the behavior characteristic information having the other characteristic automatic classification label;
the characteristic automatic labeling storage unit storing the behavior characteristic information and the other characteristic automatic classification label to which the behavior characteristic information belonging;
the to-be-trained model of the training unit capturing the behavior characteristic information and the characteristic automatic classification label to which the behavior characteristic information belonging and outputting the other trained model;
outputting the other trained model to the comparison unit, the comparison unit capturing the training characteristic information and the correct characteristic classification label;
the other trained model capturing the training characteristic information and outputting the other training information result; and
the comparison unit comparing the other training information result with the training characteristic information and the correct characteristic classification label and outputting the other trained model to the processing unit.

12. The artificial intelligence method for defending against cyber attacks as claimed in claim 10, wherein the step of the comparison unit comparing the training information result with the training characteristic information and the correct characteristic classification label to determine to optimize the trained model comprises:
connecting an optimization unit to the characteristic capturing unit;
the optimization unit making the characteristic capturing unit to use the other characteristic template, and the characteristic capturing unit generating the other behavior characteristic information according to the other characteristic template;
the automatic characteristic labeling unit capturing and labeling the other behavior characteristic information in the characteristic storage unit, so that the behavior characteristic information having the other characteristic automatic classification label;
the characteristic automatic labeling storage unit storing the behavior characteristic information and the other characteristic automatic classification label to which the behavior characteristic information belonging;
the to-be-trained model of the training unit capturing the behavior characteristic information and the characteristic automatic classification label to which the behavior characteristic information belonging and outputting the other trained model;
outputting the other trained model to the comparison unit, the comparison unit capturing the training characteristic information and the correct characteristic classification label;
the other trained model capturing the training characteristic information and outputting the other training information result; and
the comparison unit comparing the other training information result with the training characteristic information and the correct characteristic classification label and outputting the other trained model to the processing unit.
